# FASCICULE DE BREVET EUROPEEN

(11) **EP 0 698 739 B1**
(45) Date de publication et mention de la délivrance du brevet: **29.07.1998**
(21) Numéro de dépôt: 95401931.1
(22) Date de dépôt: 23.08.1995
(51) Int. Cl.: F04D 27/02

(54) **Dispositif de prélèvement d'air pour turbomachine**
Abblassvorrichtung für Turbomaschine
Bleed air apparatus for turbomachine

(30) Priorité: 24.08.1994 FR 9410237
(43) Date de publication de la demande: 28.02.1996
(73) Titulaire: SOCIETE NATIONALE D'ETUDE ET DE CONSTRUCTION DE MOTEURS D'AVIATION Snecma, F-75015 Paris (FR)
(72) Inventeur: Derouet, Patrick Roger Jean, F-77111 Soignolles en Brie (FR); Guimier, Michel Serge, F-77720 Grandpuits (FR)

(56) Documents cités:
- CH-A- 497 672
- FR-A- 2 257 787
- FR-A- 2 680 832
- GB-A- 113 718
- GB-A- 906 541
- GB-A- 2 243 871

## Description

L'invention se rapporte à un dispositif permettant de prélever de l'air avec une loi de débit spécifiée et un minimum de perturbations aérodynamiques dans un flux d'air de turbomachine, notamment de turbomoteur pour aéronef, ce flux d'air étant par nature sujet à de très fortes variations de vitesse et de pression. Plus précisément, le dispositif est autorégulé à la source, c'est à dire à l'endroit du prélèvement, ce qui permet de simplifier ou de supprimer les autres dispositifs de régulation prévus habituellement plus en aval.

Sur une turbomachine, il est habituel de prélever de l'air pour différents usages, par exemple :
- maintenir et stabiliser une différence de pression de part et d'autre des joints d'étanchéité des paliers, afin d'empêcher ou simplement de limiter les fuites d'huile,
- refroidir ou réchauffer certaines pièces de la turbomachine en particulier pour contrôler certains jeux de fonctionnement,
- dans le cas d'un turbomoteur pour aéronef, fournir de l'air chaud pour la climatisation.

Cet air est habituellement prélevé sur le compresseur, parfois entre le compresseur dit "basse pression", et le compresseur dit "haute pression", quelquefois sur le flux froid lorsqu'il s'agit de turbomoteur de type "turbofan" pour aéronef moderne, ce choix dépendant des conditons de température et de pression souhaitées pour le prélèvement.

Dans tous les cas, bien qu'à des degrés divers, le prélèvement se fait dans un flux d'air dont la vitesse et la pression varient très fortement en fonction du régime de la turbomachine, ainsi que de l'altitude et de la vitesse dans le cas d'un turbomoteur pour aéronef.

D'une part, ces variations influent sur le débit d'air prélevé, ce qui nécessite des moyens de régulation parfois importants, nécessairement coûteux et augmentant la masse de la turbomachine lorsqu'il s'agit d'un turbomoteur pour aéronef.

D'autre part, ces moyens de régulation sont souvent imparfaits, pour des raisons de coût et de masse, ce qui entraine un prélèvement d'air en excès sur le compresseur lorsque la turbomachine fonctionne à régime élevé voire au plein gaz. Il faut donc surdimensionner le compresseur et accepter alors une augmentation de coût, de masse et de performance, car le rendement du compresseur diminue. Ce prélèvement d'air en excès présente aussi des inconvénients pour les organes de la turbomachine qui l'utilisent, par exemple une augmentation de la consommation d'huile au niveau du déshuileur.

Le brevet FR 2 257 787 divulgue un dispositif de prélèvement d'air sur le compresseur d'une turbomachine. Ce dispositif comporte une soupape à papillon placée dans le conduit de prélèvement, l'ouverture de la soupape étant commandée par un piston soumis sur une face à la pression amont, et sur l'autre face à un ressort et à la pression atmosphérique via un second clapet. La liaison entre le piston et l'axe du papillon s'effectue par une bielle et une manivelle.

Ce brevet FR 2 257 787 divulgue aussi un dispositif de prélèvement d'air comportant une soupape en cloche agencée aussi en piston soumis à la pression amont, à la pression atmosphérique et à la force de rappel d'un ressort.

Le brevet FR 2 680 832 divulgue un dispositif de prélèvement d'air sur une turbomachine, ce dispositif comportant un conduit articulé et escamotable venant dans sa position active intercepter un flux de gaz contre une paroi. Ce dispositif comporte aussi des moyens de commande extérieurs au conduit articulé.

L'invention propose un dispositif de prélèvement d'air auto-régulé à la source, c'est à dire à l'endroit du prélèvement, autorisant par ce seul moyen une grande maitrise de la relation entre le débit d'air prélevé et la vitesse et la pression du flux d'air dans lequel se fait le prélèvement.

Selon l'invention, le dispositif de prélèvement comporte une coquille torique disposée dans une paroi balayée par un flux d'air, cette coquille étant susceptible de passer d'une position de saillie maximale sur la paroi à une position rentrée dans cette paroi par un pivotement autour d'un axe géométrique, cet axe étant situé dans la paroi ou dans son proche voisinage et orienté en travers du flux d'air, cette coquille présentant en position de saillie maximale une ouverture d'admission d'air face au flux d'air dans lequel doit s'effectuer le prélèvement.

La coquille a la forme générale d'un tore et passe par une ouverture de la paroi avec un jeu réduit. La partie enfouie sous la paroi comporte des ouvertures d'échappement pour laisser passer l'air prélevé.

Le dispositif est remarquable en ce que la coquille passe de la position de saillie maximale sur la paroi à la position rentrée dans la paroi par une rotation dans le sens du couple définit par le flux d'air pris en tant que vecteur et l'axe géométrique de pivotement, et en ce que cette coquille comporte des moyens de commande qui lui sont solidaires.

Ces moyens de commande comportent eux-mêmes un obstacle solidaire de la coquille et placé dans le flux d'air, et/ou un opercule disposé dans la cavité de la coquille et soumise à la pression cinétique de l'air passant dans la cavité. Ainsi, les forces exercées sur l'obstacle et/ou l'opercule tendent à faire tourner la coquille vers sa position rentrée, ce qui incline l'ouverture d'admission d'air par rapport au flux d'air et réduit de ce fait le débit d'air prélevé. Ces forces sont équilibrées par au moins un ressort dont le tarage définit ainsi la position de la coquille.

Lorsque la coquille est en position rentrée dans la paroi, l'obstacle fait encore saillie dans le flux d'air afin de maintenir la coquille dans cette position.

La paroi comporte une ouverture secondaire située en amont de l'ouverture à travers laquelle passe la coquille, cette ouverture étant obturable par la coquille et permettant d'augmenter le prélèvement dans les bas régimes de la turbomachine.

La partie en saillie de la coquille comporte aussi des ouvertures qui passent d'un côté ou de l'autre de la paroi selon la position de la coquille, ce qui permet à la fois de réduire le prélèvement dans les bas régimes et d'augmenter le prélèvement dans les hauts régimes.

Outre sa simplicité, la présente invention est intéressante en ce qu'elle offre une grande latitude pour ajuster en fonction du besoin la relation entre le débit prélevé et la vitesse et la pression du flux d'air dans lequel ce débit est prélevé, ceci malgré des variations importantes de ladite vitesse et de ladite pression.

La présente invention est particulièrement avantageuse dans le cas d'un prélèvement d'air sur le compresseur de la turbomachine. En effet, l'invention permet d'une part de prélever de l'air à des pressions plus basses dans le compresseur car la coquille en saillie récupère de la pression dynamique du flux d'air et permet en conséquence d'obtenir un débit d'air supérieur à ce qu'il serait avec un prélèvement situé en paroi.

D'autre part, la coquille rentre dans la paroi lorsque le flux d'air s'écoule à grande vitesse, ce qui réduit alors les perturbations aérodynamiques dans le compresseur.

L'invention sera mieux comprise, et ses avantages apparaitront plus clairement, au vu d'un exemple détaillé de réalisation présenté à titre indicatif et non exclusif, ainsi que des dessins annexés dans lesquels :
- la figure 1 représente une vue en coupe du dispositif en position sortie, et
- la figure 2 représente une vue en coupe de ce même dispositif en position rentrée sous l'effet d'un flux de fluide important.

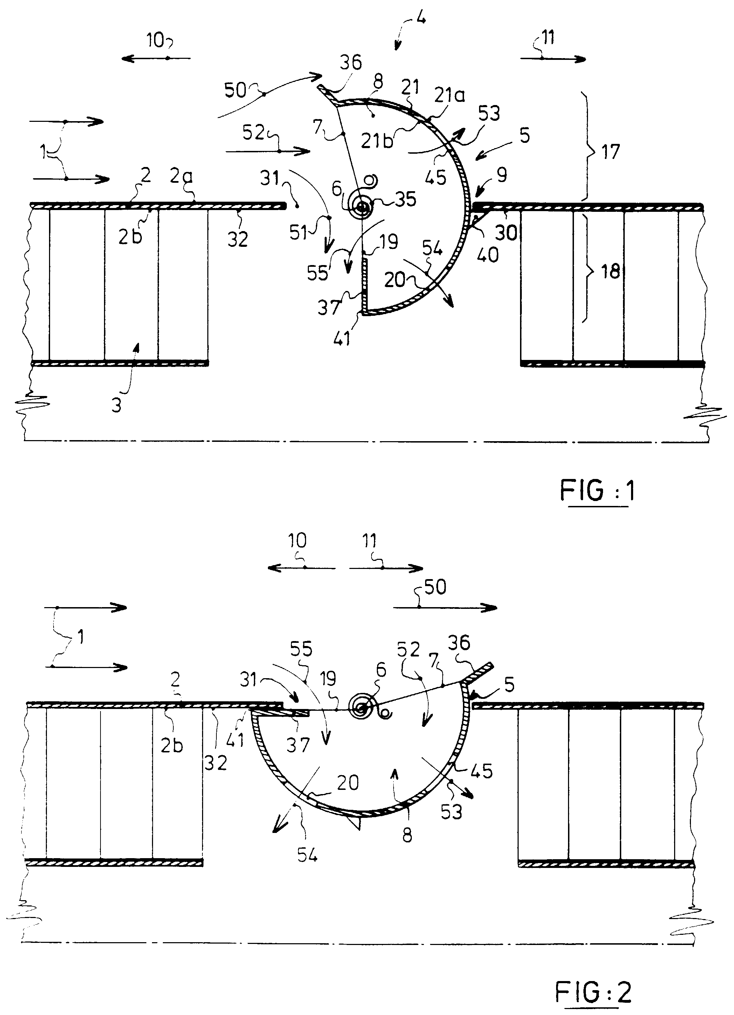

On se reportera en premier lieu à la figure 1.

Un flux d'air 1 s'écoule à la surface 2a d'une paroi 2 de la turbomachine. Cette paroi 2 peut être éventuellement renforcée par une structure 3 dite en nid d'abeilles comportant des alvéoles hexagonales solidaires de la paroi 2 par sa surface 2b opposée à la surface 2a. Les nids d'abeilles sont bien connus de l'homme de métier.

La présente invention s'applique aussi dans le cas ou la direction du flux d'air est susceptible de varier, par exemple en fonction du régime de la turbomachine, le flux d'air 1 désignant alors ce flux d'air dans sa direction préférentielle.

Le dispositif de prélèvement d'air 4 est situé dans la paroi 2 et comporte une coquille 5 pivotante autour d'un axe géométrique de rotation 6, ladite coquille 5 comportant aussi une ouverture d'admission d'air 7 mettant en communication avec l'extérieur une cavité 8 interne à la coquille 5, ladite coquille 5 passant à travers la paroi 2 par une ouverture principale 9. La cavité 8 passe aussi à travers la paroi 2 et constitue de ce fait un moyen de faire passer de l'air depuis le côté 2a de la paroi 2 vers le côté 2b. La coquille 5 pivote autour de l'axe géométrique 6 entre deux positions extrêmes :
- une première position dite p1, illustrée par la figure 1, correspondant à la saillie maximale de la coquille 5 dans le flux 1
- une seconde position dite p2, illustrée par la figure 2, dans laquelle la coquille 5 est en position rentrée dans la paroi 2, le passage de la position p1 à la position p2 s'effectuant par une rotation de la coquille 5 dans le sens du couple définit par le flux 1 pris en tant que vecteur par rapport à l'axe 6.

L'axe géométrique de pivotement 6 est situé sur la paroi 2 et orienté en travers du flux 1. Dans une forme de réalisation préférée, cet axe 6 est dans l'épaisseur de la paroi 2 et perpendiculaire au flux 1. L'axe peut être aussi dans le voisinage de cette paroi 2 parallèlement à elle.

Lorsque la coquille 5 est en position p1 de saillie maximale, l'ouverture d'admission 7 est orientée face au flux 1, et elle définit alors une direction amont 10 allant à l'encontre du flux 1, ainsi qu'une direction aval 11 de sens contraire descendant le flux 1. On comprend que dans la position p1 de saillie maximale, l'ouverture d'admission 7 étant face au flux 1 le débit d'air susceptible d'être prélevé par cette ouverture est maximal. Au contraire, lorsque la coquille 5 pivote vers sa position p2 rentrée l'ouverture d'admission 7 recule vers l'aval et s'incline progressivement par rapport au flux 1, ce qui réduit le débit d'air susceptible d'être prélevé par cette ouverture 7.

La coquille 5 pivote autour de l'axe géométrique 6 et passe dans l'ouverture principale 9 de la paroi 2 avec un jeu limité pour réduire les fuites d'air. La coquille 5 a donc la forme générale d'un secteur de tore d'axe géométrique 6 débouchant dans sa partie 17 émergeant de la face 2a sur l'ouverture d'admission 7, et dans sa partie 18 enfouie du côté de la face 2b sur une seconde ouverture 19 d'échappement.

La coquille 5 comporte aussi sur sa surface torique une ouverture périphérique 20 orientée vers l'extérieur suivant une direction radiale et disposée sur sa partie enfouie 18 à proximité de l'ouverture 19, les ouvertures 7, 19 et 20 étant mises en communication mutuelle par la cavité 8 de la coquille 5.

Dans une forme de réalisation préférée, la coquille 5 comporte une paroi 21 mince dont les extrémités forment les ouvertures 7 et 19, dont la surface extérieure 21a délimite radialement la coquille 5 vers l'extérieur, et dont la paroi intérieure 21b forme la cavité 8. Les ouvertures 7 et 19 sont situées chacune dans les plans se coupant sur l'axe géométrique 6 ou dans son voisinage.

Dans une première forme de réalisation, la section de la coquille 5 a la forme d'un demi cercle dont le diamètre est sur l'axe géométrique 6, la paroi 21 ayant en conséquence la forme d'une calotte sphérique.

Dans une seconde forme de réalisation, la section de la coquille 5 est rectangulaire dont un côté est sur l'axe géométrique 6. La paroi 21 a en conséquence la forme d'un secteur de cylindre de révolution bordé de deux flancs plans et perpendiculaires à l'axe 6.

L'ouverture 9 dans la paroi 2 est bordée de préférence dans sa partie la plus en aval d'un dégagement 30 qui libère localement la surface intérieure 2b de tout obstacle.

La forme de l'ouverture 9 est complémentaire de la section de la coquille 5.

L'ouverture 9 peut être prolongée en amont de l'axe géométrique 6 par une ouverture complémentaire 31 dans la paroi 2 distincte ou rattachée à l'ouverture 9, l'ouverture complémentaire 31 étant incluse dans une surface, non référencée, symétrique de l'ouverture 9 par rapport à l'axe 6. Cette ouverture 31 est bordée d'un dégagement 32 qui libère la surface 2b de tout obstacle au moins dans la surface non référencée symétrique de l'ouverture 9 par rapport à l'axe 6.

Du fait de la forme générale torique de la coquille 5, les forces de pression s'exerçant sur la paroi 21 ne peuvent exercer aucun couple sur la coquille, car la normale à la paroi 21 en chacun de ses points passe par l'axe géométrique de pivotement 6. Le dispositif de prélèvement 4 comporte en conséquence des moyens de commande sensibles à la vitesse et à la pression du flux de gaz 1 et qui tendent à modifier le positionnement angulaire de la coquille 5.

Les moyens de commande comportent au moins un ressort de rappel 35, par exemple un ressort en spirale centré sur l'axe 6, dont une extrémité est solidaire de la paroi 2 et l'autre de la coquille 5. Ce ressort 35 tend à faire émerger la coquille 5 de la paroi 2, c'est à dire qu'il exerce sur ladite coquille 5 un couple en sens inverse du couple définit par le flux 1 pris en tant que vecteur avec l'axe géométrique 6.

Dans une première forme de réalisation, les moyens de commande comportent un obstacle 36 solidaire de la partie émergeante 17 de la coquille 5 et placé dans le flux 1. Pour être efficace, cet obstacle doit comporter des surfaces dont la normale au moins dans certaines zones reste éloignée de l'axe géométrique 6. Cet obstacle sera avantageusement une visière constituée d'une paroi disposée à la périphérie de l'ouverture 7, les normales à cette paroi se rapprochant de l'axe 6 de préférence en amont de l'axe 6.

Dans une seconde forme de réalisation, combinable avec la première, les moyens de commande comportent un opercule 37 disposé sur la seconde ouverture 19 et obstruant celle-ci complètement ou partiellement, de préférence dans sa partie la plus éloignée de l'axe 6.

On comprend que l'obstacle 36 exerce sur la coquille 5 un couple fonction de la vitesse du flux 1, que l'opercule 37 reçoit les pressions statique et cinétique du flux 1 par l'intermédiaire de la cavité 8 et exerce en conséquence sur la coquille un couple fonction de cette pression, et que les couples ainsi exercés sont dans le même sens que le couple défini par le flux 1 pris en tant que vecteur avec l'axe géométrique 6.

On comprend aussi que les couples exercés par l'obstacle 36 et l'opercule 37 sont équilibrés par les ressorts de rappel 35, ce qui définit la position courante de la coquille 5.

La coquille 5 comporte aussi des moyens de positionnement qui en limitent le débattement.

Ces moyens de positionnement comportent eux-mêmes une butée 40 disposée en saillie à la périphérie de la paroi 21 de la coquille, sur la partie enfouie 18 de ladite paroi 21 et à la limite de ladite partie enfouie 18 et de la partie émergeante 17. Cette butée est du côté de la paroi 2 opposée au flux et arrive contre le dégagement 30 lorsque la coquille 5 est en position émergeante maximale p1.

Ces moyens de positionnement sont aussi assurés par l'extrémité 41 de la paroi 21 bordant l'ouverture 19, ladite extrémité 41 arrivant contre le dégagement 32 lorsque la coquille 5 est en position rentrée p2.

La coquille 5 comporte aussi des moyens de modulation du prélèvement constitués par une ou plusieurs ouvertures 45 sur la partie émergeante 17 de la paroi 21. On comprend que lorsque la coquille 5 est en position de saillie maximale, les ouvertures 45 sont toutes situées du côté de la paroi 2 exposée au flux. Inversement, lorsque la coquille 5 rentre dans la paroi 2, les ouvertures 45 suffisamment éloignées de l'ouverture 7 se retrouvent du côté de la paroi 2 opposée au flux 1, ces ouvertures 45 pouvant en conséquence passer d'un côté ou de l'autre de la paroi 2 selon la position angulaire de la coquille 5.

On va maintenant décrire le fonctionnement du dispositif de prélèvement 4.

Lorsque le flux 1 est faible, le couple exercé sur les moyens de commande 36, 37 est faible et les ressorts 35 amènent la coquille 5 dans sa position p1 de saillie maximale par rapport à la paroi 2, la butée 40 arrivant contre le dégagement 30. Le flux 1 longeant la paroi 2 se divise en plusieurs flux en arrivant sur le dispositif de prélèvement 4:
- le flux 50 contourne la coquille 5,
- le flux 51 passe par l'ouverture complémentaire 31, si cette ouverture est présente,
- le flux 52 entre dans la cavité 8 de la coquille 5 par l'ouverture 7, ce flux 52 se divisant lui-même en :
- un flux 53 qui ressort de la coquille par l'ouverture 45 si elle est présente
- un flux 54 qui ressort de la coquille par l'ouverture périphérique 20,
- un flux 55 qui ressort par l'ouverture d'échappement 19 de la coquille 5 lorsque cette ouverture 19 n'est pas complètement obturée par l'opercule 37.

On comprend que lorsque le flux 1 est faible, la quantité prélevée correspond au flux 54 augmenté des flux 55 et 51 lorsque ceux-ci existent.

Lorsque la vitesse du flux 1 augmente, ce flux exerce une poussée vers l'aval 11 sur l'obstacle 36 et tend à faire tourner la coquille 5 vers sa position rentrée p2.

L'ouverture 7 de la coquille 5 est plus inclinée par rapport au flux 1, ce qui réduit le flux 52 passant dans la cavité 8, et par répercussion les flux 54 et 55, ce qui réduit la quantité prélevée. Cet effet est accentué par l'obstruction progressive de l'ouverture 31, ce qui réduit encore plus le flux 51. Le flux 52 entraîné dans la cavité 8 exerce aussi une poussée contre la paroi intérieure de l'opercule 37, ce qui fait tourner encore plus la coquille 5, réduisant ainsi la quantité prélevée.

On se reportera maintenant à la figure 2. Lorsque le flux 1 est important, la coquille 5 tourne vers sa position rentrée p2 et arrive en butée par son extrémité 41 contre le dégagement 32. L'ouverture 31 est alors recouverte par l'ouverture 19 de la coquille 5 et le flux 55 s'inverse. Du fait que l'obstacle 36 reste en saillie dans le flux 1 lorsque la coquille 5 est en position rentrée p2, le flux 1 exerce toujours une poussée sur l'obstacle 36, ce qui maintient la coquille 5 en position rentrée p2.

Aux bas régimes, la coquille 5 est en saillie, l'ouverture 45 est du côté de la paroi 2 exposée au flux 1 et le flux 53 sortant de la coquille 5 par l'ouverture 45 réduit la quantité d'air prélevé. Aux régimes élevés au contraire, la coquille 5 rentre dans la paroi 2, l'ouverture 45 passe de l'autre côté de la paroi 2 et le flux 53 vient maintenant augmenter la quantité d'air prélevée.

Ainsi une ouverture 45 sur la partie saillante 17 de la coquille 5 réduit le flux aux bas régimes et l'augmente aux hauts régimes, la transition se faisant lorsque l'ouverture 45 passe d'un côté à l'autre de la paroi 2 et arrive au niveau de cette paroi 2. On comprend que cette ouverture 45 permet de moduler aux régimes intermédiaires la relation entre le prélèvement et ce régime.

On peut aussi disposer plusieurs ouvertures 45 de tailles différentes sur la partie saillante 17 pour obtenir des relations complexes entre le prélèvement et le régime.

L'invention n'est pas limitée aux réalisations décrites, mais en couvre au contraire toutes les variantes qui pourraient leur être apportées sans sortir de leur cadre ni de leur esprit.

Les avantages du présent dispositif de prélèvement 4 apparaissent maintenant clairement. Bien que d'une grande simplicité, le dispositif permet de contrôler la quantité de fluide prélevé malgré des variations importantes en vitesse et en pression du flux 1, et d'assurer une relation spécifiée même complexe entre le prélèvement et le régime. Ainsi :
- on peut obtenir une augmentation du prélèvement avec un flux 1 fort en augmentant la force des ressorts 35,
- on peut augmenter le prélèvement aux flux 1 faibles en augmentant l'ouverture 31 et en réduisant l'opercule 37,
- on peut réduire le prélèvement aux flux 1 fort en réduisant l'ouverture 20
- on peut même annuler le prélèvement aux flux 1 forts en supprimant les ouvertures 20 et 31
- on peut aussi simultanément réduire le prélèvement avec les flux 1 faibles et augmenter ce prélèvement avec les flux 1 forts en disposant une ou plusieurs ouvertures 45 sur la partie émergeante 17 de la coquille 5.

On remarquera aussi que le présent dispositif de prélèvement est efficace aux flux 1 faibles et n'apporte que peu de perturbations à l'écoulement du flux 1 lorsqu'il est fort. Ceci provient du fait que :
- d'une part, aux flux 1 faibles, la coquille 5 est en saillie maximale, l'ouverture 7 est bien en face du flux 1 et voit son efficacité renforcée par l'obstacle 36, alors que
- d'autre part, aux flux 1 forts, la coquille 5 est presque complètement rentrée dans la paroi 2 et ne fait plus que faiblement obstacle à ce flux 1.

La présente invention ne peut être confondue avec l'écope divulguée par le brevet cité FR 2 680 832. Dans ce brevet en effet, le flux traversant l'écope passe en amont de l'axe de pivotement alors que dans la présente invention, le flux traversant la coquille 5 contourne l'axe de pivotement 6 et passe en aval de celui-ci. Les sens de rotation ouverture-fermeture sont inversés, de sorte que la pression cinétique du flux tend à ouvrir l'écope au lieu de la fermer, ce qui est contraire à l'effet de régulation recherché.

## Revendications

1. Dispositif de prélèvement d'air auto-régulé à la source pour turbomachine, ledit dispositif (4) étant placé dans une paroi (2) balayée le long d'une de ses faces (2a) par un flux d'air (1), ledit dispositif (4) comportant une coquille (5) pivotante autour d'un axe (6) en passant à travers la paroi (2) par une ouverture principale (9), ladite coquille (5) pivotant autour de l'axe géométrique (6) entre une position p1 de saillie maximale et une position p2 rentrée dans la paroi (2), ledit axe (6) étant orienté en travers du flux (1), ladite coquille (5) comportant une ouverture (7) d'admission d'air débouchant dans une cavité (8) interne à ladite coquille (5), ladite ouverture (7) étant orientée face au flux (1) lorsque ladite coquille (5) est en position p1 de saillie maximale, ladite ouverture (7) définissant dans cette position une direction vers l'amont (10) et une direction opposée vers l'aval (11), caractérisé en ce que la coquille (5) passe de la position p1 de saillie maximale à la position p2 rentrée par une rotation dans le sens du couple défini par le flux (1) et l'axe géométrique (6), ce qui a pour effet de faire reculer l'ouverture d'admission (7) vers l'aval (11) et de l'incliner par rapport au flux (1), et en ce que la coquille (5) comporte des moyens de commande qui lui sont solidaires.

2. Dispositif conforme à la revendication 1, caractérisé en ce que la coquille (5) a la forme générale d'un secteur de tore d'axe géométrique (6) dont la partie enfouie (18) dans la paroi (2) débouche sur une ouverture d'échappement (19).

3. Dispositif conforme à la revendication 1 ou 2 caractérisé en ce que la coquille (5) comporte sur sa surface torique et dans la partie enfouie (18) une ouverture périphérique (20) orientée vers l'extérieur suivant une direction radiale.

4. Dispositif conforme à l'une quelconque des revendications 1 à 3, caractérisé en ce qu'il comporte un obstacle (36) placé dans le flux (1) sur la partie émergeante (17) de la coquille (5).

5. Dispositif conforme à l'une quelconque des revendications 1 à 4, caractérisé en ce qu'il comporte un opercule (37) obstruant complètement ou partiellement l'ouverture (19).

6. Dispositif conforme à la revendication 4 ou 5, caractérisé en ce qu'il comporte au moins un ressort (35), lesdits ressorts (35) exerçant sur la coquille (5) un couple en sens inverse du couple définit par le flux (1) et l'axe (6), lesdits ressorts équilibrant les couples exercés par l'obstacle (36) et l'opercule (37) sur la coquille (5).

7. Dispositif conforme à l'une quelconque des revendications 4 à 6, caractérisé en ce que l'obstacle (36) est encore en saillie dans le flux (1) lorsque la coquille (5) est dans sa position rentrée p2, afin de maintenir la coquille (5) dans cette position p2.

8. Dispositif conforme à l'une quelconque des revendications 1 à 7, caractérisé en ce qu'il comporte une ouverture complémentaire (31) dans la paroi (2), ladite ouverture (31) prolongeant l'ouverture (9) en amont de l'axe géométrique (6), afin d'augmenter le prélèvement d'air dans les bas régimes.

9. Dispositif conforme à la revendication 8, caractérisé en ce que l'ouverture complémentaire (31) est recouverte par l'ouverture (19) de la coquille (5) en position rentrée p2, afin de réduire le prélèvement dans les hauts régimes.

10. Dispositif conforme à l'une quelconque des revendications 1 à 9, caractérisé en ce que la coquille (5) comporte au moins une ouverture (45) sur sa partie émergée (17) pour moduler le flux selon le régime.

## Patentansprüche

1. Luftentnahmevorrichtung mit Selbstregulierung an der Quelle für Turbomaschinen, wobei
diese Vorrichtung (4) in einer Wandung (2) angeordnet ist, die entlang einer ihrer Seiten (2a) von einer Luftströmung bestrichen wird,
die Vorrichtung (4) eine Schale (5) aufweist, die um eine Achse (6) schwenkbar ist, wobei sie durch eine Hauptöffnung (9) durch die Wandung (2) hindurchtritt,
die Schale (5) um die geometrische Achse (6) zwischen einer Position pl maximaler Ausladung und einer in die Wandung (2) eingefahrenen Position p2 verschwenkt wird,
die Achse (6) quer zu der Luftströmung (1) orientiert ist,
die Schale (5) eine Öffnung (7) für den Luftzutritt aufweist, die in einem Hohlraum (8) innerhalb der Schale (5) mündet,
die Öffnung (7) der Luftströmung zugekehrt ist, wenn die Schale (5) sich in der Position p1 maximaler Ausladung befindet,
die Öffnung (7) in dieser Position eine stromaufwärtige Richtung (10) und entgegengesetzte stromabwärtige Richtung (11) definiert,
**dadurch gekennzeichnet,**
daß die Schale (5) durch eine Drehung in Richtung des durch die Strömung (1) und die geometrische Achse (6) definierten Moments aus der Position pl maximaler Ausladung in die eingefahrene Position p2 übergeht mit der Folge, daß die Zutrittsöffnung (7) in stromabwärtiger Richtung (11) zurückgestellt und relativ zu der Strömung (1) geneigt wird,
und daß die Schale (5) fest mit ihr verbundene Steuermittel aufweist.

2. Vorrichtung nach Anspruch 1, dadurch gekennzeichnet, daß die Schale (5) allgemein die Form eines Torussektors mit geometrischer Achse (6) hat, dessen in der Wandung (2) verborgener Teil (18) in einer Auslaßöffnung (19) mündet.

3. Vorrichtung nach Anspruch 1 oder 2, dadurch gekennzeichnet, daß die Schale (5) auf ihrer Torusfläche und in dem verborgenen Teil (18) eine periphere Öffnung (20) aufweist, die radial nach außen weist.

4. Vorrichtung nach einem der Ansprüche 1 bis 3, dadurch gekennzeichnet, daß sie an dem vorstehenden Teil (17) der Schale (5) ein in der Strömung (1) liegendes Hindernis (36) aufweist.

5. Vorrichtung nach einem der Ansprüche 1 bis 4, dadurch gekennzeichnet, daß sie ein Deckelteil (37) aufweist, das die Öffnung (19) ganz oder teilweise verschließt.

6. Vorrichtung nach Anspruch 4 oder 5, dadurch gekennzeichnet, daß sie wenigstens eine Feder (35) aufweist, wobei diese Federn (35) auf die Schale (5) ein Moment ausüben, dessen Richtung der Richtung des durch die Strömung (1) und die Achse (6) definierten Moments entgegengesetzt ist, wobei diese Federn die von dem Hindernis (36) und dem Deckelteil (37) auf die Schale (5) ausgeübten Momente im Gleichgewicht halten.

7. Vorrichtung nach einem der Ansprüche 1 bis 6, dadurch gekennzeichnet, daß das Hindernis (36) auch dann noch in die Strömung (1) hineinragt, wenn die Schale (5) sich in der eingefahrenen Position p2 befindet, um die Schale (5) in dieser Position p2 zu halten.

8. Vorrichtung nach einem der Ansprüche 1 bis 7, dadurch gekennzeichnet, daß sie eine ergänzende Öffnung (31) in der Wandung (2) aufweist, wobei diese Öffnung (31) die Öffnung (9) auf der stromaufwärtigen Seite der geometrischen Achse (6) verlängert, um die Luftentnahme bei niedrigen Drehzahlen zu vergrößern.

9. Vorrichtung nach Anspruch 8, dadurch gekennzeichnet, daß die ergänzende Öffnung (31) in der eingefahrenen Position p2 von der Öffnung (19) der Schale (5) verdeckt wird, um die Luftentnahme bei hohen Drehzahlen zu reduzieren.

10. Vorrichtung nach einem der Ansprüche 1 bis 9, dadurch gekennzeichnet, daß die Schale (5) an ihrem vorstehenden Teil (17) wenigstens eine Öffnung (45) aufweist, um die Strömung in Abhängigkeit von der Drehzahl zu modulieren.

## Claims

1. Air bleed device, self-regulated at source, for a turbomachine, the said device (4) being placed in a wall (2) which is swept along one of its faces (2a) by an air flow (1), the said device (4) comprising a shell (5) which pivots about an axis (6), passing through the wall (2) via a main opening (9), the said shell (5) pivoting about the geometric axis (6) between a position pl of maximum projection and a position p2 retracted into the wall (2), the said axis (6) being directed across the flow (1), the said shell (5) comprising an air-inlet opening (7) which opens into a cavity (8) internal to the said shell (5), the said opening (7) being directed to face the flow (1) when the said shell (5) is in the position pl of maximum projection, the said opening (7) in this position defining a direction upstream (10) and an opposite direction downstream (11), characterized in that the shell (5) moves from the position p1 of maximum projection into the retracted position p2 by rotation in the direction of the moment defined by the flow (1) and the geometric axis (6), this having the effect of making the inlet opening (7) retreat downstream (11) and of inclining it with respect to the flow (1), and in that the shell (5) comprises control means which are secured to it.

2. Device in accordance with Claim 1, characterized in that the shell (5) has the overall shape of a sector of a torus of geometric axis (6), of which the part (18) which is buried in the wall (2) opens into an exhaust opening (19).

3. Device in accordance with Claim 1 or 2, characterized in that the shell (5) on its toric surface and in the buried part (18) has a peripheral opening (20) directed outwards in a radial direction.

4. Device in accordance with any one of Claims 1 to 3, characterized in that it comprises an obstacle (36) placed in the flow (1) on the emerging part (17) of the shell (5).

5. Device in accordance with any one of Claims 1 to 4, characterized in that it comprises a cover (37) which fully or partially covers over the opening (19).

6. Device in accordance with Claim 4 or 5, characterized in that it comprises at least one spring (35), the said springs (35) exerting on the shell (5) a moment in the opposite direction to the moment defined by the flow (1) and the axis (6), the said springs balancing the moments exerted by the obstacle (36) and the cover (37) on the shell (5).

7. Device in accordance with any one of Claims 4 to 6, characterized in that the obstacle (36) still projects into the flow (1) when the shell (5) is in its retracted position p2, so as to keep the shell (5) in this position p2.

8. Device in accordance with any one of Claims 1 to 7, characterized in that it comprises an additional opening (31) in the wall (2), the said opening (31) extending the opening (9) upstream of the geometric axis (6), so as to increase the air bleed at low speeds.

9. Device in accordance with Claim 8, characterized in that the additional opening (31) is covered by the opening (19) of the shell (5) in the retracted position p2 so as to reduce the bleed at high speeds.

10. Device in accordance with any one of Claims 1 to 9, characterized in that the shell (5) comprises at least one opening (45) on its emergent part (17) so as to modulate the flow according to the speed.
